# EUROPÄISCHE PATENTSCHRIFT

(11) **EP 2 345 025 B1**
(45) Veröffentlichungstag und Bekanntmachung des Hinweises auf die Patenterteilung: **11.12.2013**
(21) Anmeldenummer: 09736415.2
(22) Anmeldetag: 16.10.2009
(51) Int. Cl.: G10K 11/00, B63G 8/39, H01Q 1/34

(54) **UNTERWASSERANTENNE**
SUBMARINE ANTENNA
ANTENNE SOUS-MARINE

(30) Priorität: 20.10.2008 DE 102008052354
(43) Veröffentlichungstag der Anmeldung: 20.07.2011
(73) Patentinhaber: ATLAS ELEKTRONIK GmbH, 28309 Bremen (DE)
(72) Erfinder: KRISTANN, Andreas, 28307 Bremen (DE); LINDNER, Jürgen, 27777 Ganderkesee (DE); JUNGE, Wilfried, 28309 Bremen (DE)
(86) Internationale Anmeldenummer: PCT/EP2009/063581
(87) Internationale Veröffentlichungsnummer: WO 2010/046318

(56) Entgegenhaltungen:
- EP-A1- 0 654 953
- DE-A1- 3 834 669
- DE-A1-102004 037 987
- DE-T2- 60 207 628
- US-B1- 7 180 828

## Beschreibung

Die Erfindung betrifft eine Unterwasserantenne, insbesondere zum Anbau an den Bootskörper eines Unterseeboots, nach dem Oberbegriff des Anspruchs 1.

Eine bekannte, als sog. Zylinderbasis ausgeführte Unterwasserantenne (DE 43 39 798 A1) weist eine Mehrzahl von stabförmigen Antennenelementen auf, die auf einem Antennenträger, hier auf der Außenwand eines Hohlzylinders, äquidistant befestigt sind. Jedes stabförmige Antennenelement weist einen aus einer Metallplatine und einer Weichstoffplatte zusammengesetzten Reflektor und mehrere, untereinander angeordnete Hydrophone auf, die dem Reflektor in Schalleinfallsrichtung vorgeordnet sind. Jedes Hydrophon ist dabei auf einem Abstandshalter aus Polyurethan aufgeklebt, der auf der Metallplatine befestigt, z.B. aufgeklebt, ist. Alle Hydrophone sind über Anschlussleitungen auf einen gemeinsamen Stecker geführt. Reflektor und Hydrophone mit Anschlussleitungen sind in einer akustisch transparenten Vergussmasse aus einem im Gießverfahren bearbeitbaren, im wesentlichen zähelastischen Elastomer, z.B. Polyurethan, eingebettet. In der Vergussmasse sind Durchgangslöcher vorgehalten, durch die Schrauben hindurchgeführt sind, um das stabförmige Antennenelement am Antennenträger zu befestigen. Die Hydrophone sind kleine Kugelkeramiken, und die Metallplatine ist aus zwei Metallblechen mit dazwischenliegender, elastischer Schicht zur Biegewellendämpfung zusammengesetzt.

Eine bekannte, flächig ausgebildete Unterwasserantenne, auch Flächenantenne genannt (DE 10 2004 037 987 A1), ist aus einer Mehrzahl von paneelartigen Antennensegmenten zusammengesetzt. Jedes Antennensegment weist einen akustisch transparenten plattenartigen Kunststoffkörper auf, in dem in Reihe und Spalten angeordnete Hydrophone und eine als Reflektor dienende, biegesteife Platte, die in Schalleinfallsrichtung hinter den Hydrophonen angeordnet ist, eingebettet sind. Eine solche, für Empfangsantennen im mittleren bis höheren Frequenzbereich ausgelegte Flächenantenne hat ein gutes Vor-/Rückwärtsverhältnis und besitzt durch die Möglichkeit der addierten Zusammenfassung der Ausgangssignale der in Anbaulage der Antenne in Spalten vertikal untereinanderliegenden Hydrophone auch eine gute Bündelung der Richtcharakteristik im vertikalen Empfangsbereich und damit ein verbessertes Nutz-/Störverhältnis.

Eine bekannte zylindrische Unterwasserantenne, die als ungerichteter akustischer Empfänger in passiven Sonargeräten verwendet wird und auf dem Rumpf von Unterseebooten angeordnet ist (DE 602 07 628 T2), weist eine Gruppe von akustischen Empfangssäulen auf, die auf dem äußeren Mantel eines Trägerzylinders in Umfangsrichtung nebeneinander befestigt sind. Jede Säule enthält vertikal übereinander angeordnete Hydrophone, die in einer ersten Schicht aus weichem Polyurethan eingebettet sind, eine der ersten Schicht in Schalleinfallsrichtung vorgesetzte zweite Schicht aus hartem Polyurethan, eine in Schalleinfallsrichtung der ersten Schicht nachgeordnete Stahlplatte, die einen harten Reflektor für die Schallwellen bildet, und eine dem Reflektor nachgeordnete, dicke absorbierende Schicht aus einem syntaktischen Material. Eine Neoprenhülle umschließt je nach Ausführung die komplette Säule oder die erste und zweite Schicht aus Polyurethan sowie den Reflektor oder nur die erste und zweite Schicht aus Polyurethan. Jede Säule ist mit zwei an ihrer Rückseite abstehenden, steifen Haltern ausgestattet, die an dem Trägerzylinder direkt oder über Stoßdämpferklötzchen befestigt sind.

Eine bekannte akustische Unterwasserantenne (US 7,180,828 B1) weist eine Mehrzahl von Wandlerstäben auf, die sich zwischen einem oberen und einem unteren zylindrischen Rahmen erstrecken. Jeder Wandlerstab enthält mehrere übereinander beabstandet angeordnete Hydrophone. Die Hydrophone sind zusammen mit dazwischen angeordneten Formschaumstücken auf einem Tragseil festgelegt und in einer schlauchartigen Hülle aufgenommen, die mit Öl gefüllt ist. Oben und unten die Hülle abschließende Endstücke sind jeweils über einen flexiblen Strang mit den beiden zylindrischen Rahmen verbunden.

Der Erfindung liegt die Aufgabe zugrunde, bei einer flächenhaft ausgedehnten Unterwasserantenne die elektroakustischen Wandler akustisch von dem von einem Antennenträger ausgehenden Körperschall zu entkoppeln.

Die Aufgabe ist erfindungsgemäß durch die Merkmale im Anspruch 1 gelöst.

Die erfindungsgemäße Unterwasserantenne hat den Vorteil, dass durch das Umgießen der untereinanderliegenden Hydrophone mit einer akustisch transparenten Vergussmasse ein stabförmiger Wandler mit einem verbesserten Nutz-/Störverhältnis wegen der Bündelung seiner Richtchasakteristik im vertikalen Empfangsbereich entsteht, der mittels der endseitigen Federelemente ein Feder-Masse-System bildet, dessen Resonanzfrequenz durch entsprechende Bemessung der Federelemente so abgestimmt werden kann, dass sie weit außerhalb des Nutzfrequenzbereichs der Unterwasserantenne liegt. Dadurch werden die stabförmigen Wandler der Unterwasserantenne an der Verbindung zum Reflektor im hydroakustisch wichtigen Nutzfrequenzbereich vom störenden, vom Bootskörper auf den Reflektor übertragenen Körperschall akustisch entkoppelt und das Nutz-/Störverhältnis der Unterwasserantenne insgesamt verbessert.

Zweckmäßige Ausführungsformen der erfindungsgemäßen Unterwasserantenne mit vorteilhaften Weiterbildungen und Ausgestaltungen der Erfindung ergeben sich aus den weiteren Ansprüchen.

Gemäß einer vorteilhaften Ausführungsform der Erfindung sind die federnden Halteelemente mit der Vergussmasse einstückig ausgeformt. Dadurch können die federnden Halteelemente mit ihren frequenzbestimmenden Abmessungen in einem Arbeitsgang mit der Fertigung der Wandlerstäbe hergestellt werden.

Gemäß einer vorteilhaften Ausführungsform der Erfindung weisen die federnden Halteelemente einen T-förmigen Querschnitt mit einem federelastischen Mittelsteg und einem vorzugsweise tellerförmigen Querteil auf. Die Mittelstege der Halteelemente werden in einfacher Weise durch Einschnürung der die Hydrophone umschließenden Vergussmasse gebildet. Die Querteile der Halteelemente sind in eine obere und eine untere, jeweils am Reflektor festgelegte Haltevorrichtung eingehängt. Dadurch wird eine einfache und schnelle Montage der Wandlerstäbe ermöglicht, da die Wandlerstäbe mit ihren Querteilen in die obere Haltevorrichtung einfach eingehängt werden können und während der Befestigung in der unteren Haltevorrichtung vom Monteur nicht gehalten werden müssen.

Gemäß einer vorteilhaften Ausführungsform der Erfindung sind die Querteile der Halteelemente in in den Haltevorrichtungen vorgehaltenen Aussparungen formschlüssig aufgenommen, wobei ein Querteil, vorzugsweise das Querteil der oberen Halteelemente, an einem Wandlerstab eine asymmetrische Form aufweist. Durch diese Asymmetrie der Querteile der einen Halteelemente an den Wandlerstäben ist sichergestellt, dass jeder Wandlerstab die gleiche Einbaulage erhält.

Gemäß einer vorteilhaften Ausführungsform der Erfindung ist der Reflektor mit einem Hartumguss versehen und die obere Haltevorrichtung in Form einer quer zu den Wandlerstäben sich erstreckenden Leiste einstückig mit dem Hartumguss ausgebildet, wobei die Aussparungen zur Aufnahme der Querteile der oberen Halteelemente der Wandlerstäbe äquidistant in die Leiste eingeformt sind. Die untere Haltevorrichtung weist mehrere, die unteren Halteelemente der Wandlerstäbe paarweise aufnehmende Halter auf, die am Reflektor festgeschraubt sind. Die Wandlerstäbe werden mit ihren oberen Halteelementen in die Aussparungen in der Leiste eingehängt und mit ihren unteren Halteelementen paarweise durch einen Halter der unteren Haltevorrichtung an dem Reflektor fixiert, so dass in keiner Lage des Reflektors sich die Wandlerstäbe von dem Reflektor lösen können.

Die Erfindung ist anhand eines in der Zeichnung dargestellten Ausführungsbeispiels im folgenden näher beschrieben. Es zeigen:
- Fig. 1: ausschnittweise eine Draufsicht einer Unterwasserantenne,
- Fig. 2: einen Schnitt längs der Linie II - II in Fig. 1,
- Fig. 3: eine perspektivische Darstellung eines Wandlerstabs der Unterwasserantenne in Fig. 1 und 2,
- Fig. 4: eine vergrößerte perspektivische Darstellung des Ausschnitts IV in Fig. 1,
- Fig. 5: eine vergrößerte perspektivische Darstellung des Ausschnitts V in Fig. 1.

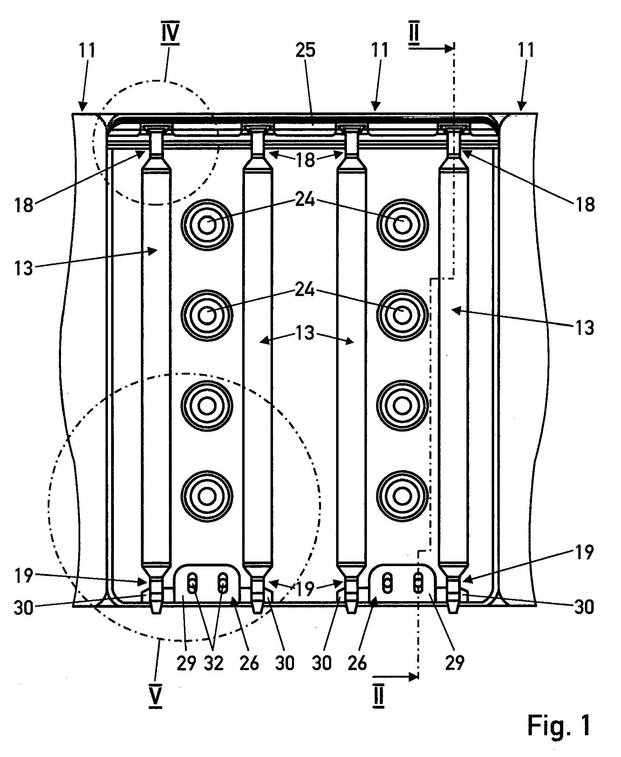

Die in Fig. 1 in Draufsicht ausschnittweise dargestellte Unterwasserantenne ist vorzugsweise als flächige Seitenantenne zur Anbringung an den Bootskörper eines Unterseeboots konzipiert. Üblicherweise ist je eine Seitenantenne backbord und steuerbord vorhanden. Die Unterwasserantenne ist aus mehreren Antennensegmenten 11 zusammengesetzt, die längs des Bootskörpers horizontal aneinandergesetzt sind. Je nach Länge der Unterwasserantenne bzw. des Bootskörpers variiert die Anzahl der aneinandergesetzten Antennensegmente 11.

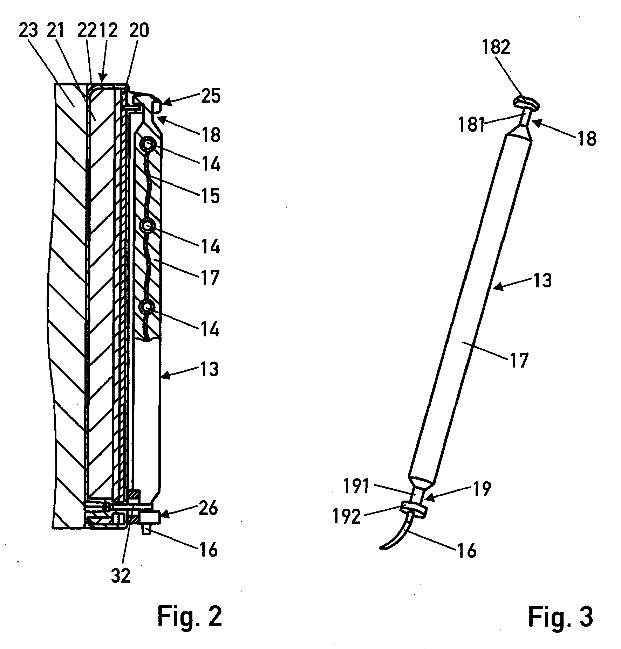

Jedes Antennensegment 11, von denen in Fig. 1 nur ein Antennenelement 11 im Detail dargestellt ist, weist einen Reflektor 12 und eine Mehrzahl von nebeneinander äquidistant angeordneten, elektroakustischen Wandlern, im folgenden Wandlerstäbe 13 genannt, auf, die in Schalleinfallsrichtung vor dem Reflektor 12 angeordnet sind. Jeder Wandlerstab 13 weist, wie dies aus der Schnittdarstellung der Fig. 2 ersichtlich ist, mehrere untereinander äquidistant angeordnete Hydrophone 14 in Form von kleinen Kugelkeramiken auf. Zu den Hydrophonen 14 sind elektrische Anschlussleitungen 15 geführt, die am unteren Ende des Wandlerstabs 13 zu einem Kabel 16 (Fig. 3) zusammengefasst sind, das aus dem Wandlerstab 13 austritt. Die untereinander angeordneten Hydrophone 14 sind in einer akustisch transparenten Vergussmasse 17, z.B. Polyurethan, eingebettet, wobei die vergussmasse 17 die kreisrunde oder rechteckige Stabform der Wandlerstäbe 13 vorgibt. An jedem Ende des Wandlerstabe 13 ist mittels der Vergussmasse 17 ein federndes oberes Halteelement 18 und ein federndes unteres Halteelement 19 ausgeformt. Die Halteelemente 18, 19 weisen einen T-förmigen Querschnitt mit einem Mittelsteg 181 bzw. 191 und einem tellerförmigen Querteil 182 bzw. 192 auf. Die Mittelstege 181 und 191 sind in einfacher Weise durch Einschnüren der Vergussmasse 17 gebildet, wobei der Einschnürung der Vergussmasse 17 im Bereich des unteren Mittelstegs 191 durch das dort verlaufende Kabel 16 der Hydrophone 14 Grenzen gesetzt sind. Während das tellerförmige Querteil 192 des unteren Halteelements 19 rotationssymmetrisch ausgebildet ist, ist das tellerförmige Querteil 182 des oberen Halteelements 18 asymmetrisch geformt.

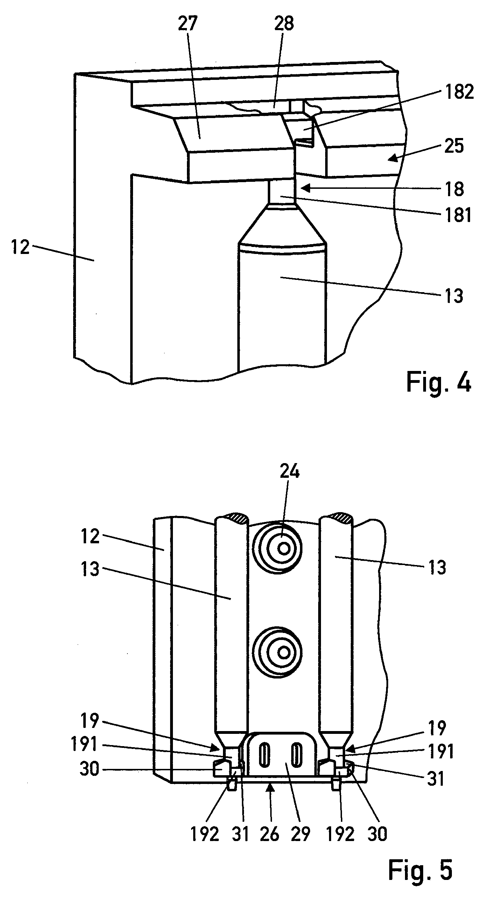

Der in Fig. 1 in Draufsicht und in Fig. 2 im Schnitt zu sehende Reflektor 12 weist eine aus zwei dünnen Blechen zusammengesetzte Metallplatine 20 auf , die auf eine Weichstoffplatte 21, z.B. aus Polyurethan-Schaum, aufgelegt ist. Metallplatine 20 und Weichstoffplatte sind gemeinsam mit einem Umguss 22 aus wasserbeständigem Kunststoff, z.B. aus Polyurethan, umgossen. Der Reflektor 12 ist an einem Antennenträger 23, der in Fig. 2 ausschnittweise skizziert ist, befestigt. Die hierzu in den Antennenträger 23 eingeschraubten Schrauben sind in Fig. 1 mit ihren Schraubenköpfen 24 zu sehen. Beispielhaft kann der Antennenträger 23 ein Auftriebskörper aus einem Hartschaumkern mit Hartumguss sein, der seinerseits am Bootskörper festgelegt ist. Die in Schalleinfallsrichtung vor dem Reflektor 12 angeordneten Wandlerstäbe 13 sind mit ihren federnden Halteelementen 18, 19 mittels einer oberen Haltevorrichtung 25 und einer unteren Haltevorrichtung 26 am Reflektor 12 festgelegt, wobei jeweils die tellerförmigen Querteile 182, 192 in den Haltevorrichtungen 25, 26 aufgenommen sind. Die obere Haltevorrichtung 25 ist als längs der oberen Querkante des Reflektors 12 sich erstreckende Leiste 27 ausgebildet, die beim Herstellen des Reflektors 12 gleich mit in den Umguss 22 eingegossen wird. Wie insbesondere aus Fig. 4 deutlich zu erkennen ist, sind in der Leiste 27 Aussparungen 28 äquidistant angeordnet, die so geformt sind, dass die asymmetrischen, tellerförmigen Querteile 182 der oberen Halteelemente 18 der Wandlerstäbe 13 formschlüssig in den Aussparungen 28 aufgenommen werden. Damit ist sichergestellt, dass alle Wandlerstäbe mit der gleichen Ausrichtung montiert werden. Die untere Haltevorrichtung 26 besteht aus einzelnen Haltern 29, die die Wandlerstäbe 13 paarweise am Reflektor 12 festlegen. Jeder Halter 29 hat zwei seitliche Laschen 30. In jeder Lasche 30 ist eine Aussparungen 31 zur formschlüssigen Aufnahme eines rotationssymmetrischen Querteils 192 eines unteren Halteelements 19 eines Wandlerstabs 13. Die Halter 29 sind mittels Befestigungsschrauben 32 (Fig. 1 und 2) am Reflektor 12 festgeschraubt.

## Patentansprüche

1. Unterwasserantenne, insbesondere zum Anbau an den Bootskörper eines Unterseeboots, mit einer Mehrzahl von nebeneinander angeordneten, elektroakustischen Wandlern, die jeweils eine Mehrzahl von untereinander angeordneten Hydrophonen (14) aufweisen, und mit einem in Schalleinfallsrichtung hinter den Wandlern angeordneten Reflektor (12), wobei die untereinander angeordneten Hydrophone (14) eines jeden Wandlers mittels einer akustisch transparenten Vergussmasse (17) zu einem Wandlerstab (13) vergossen sind, **dadurch gekennzeichnet, dass** jeder Wandlerstab (13) an seinen Stabenden mit federnden Halteelementen (18, 19) versehen ist, die am Reflektor (12) festgelegt sind.

2. Unterwasserantenne nach Anspruch 1, **dadurch gekennzeichnet, dass** die federnden Halteelemente (18, 19) aus der Vergussmasse (17) ausgeformt sind.

3. Unterwasserantenne nach Anspruch 2, **dadurch gekennzeichnet, dass** die federnden Halteelemente (18, 19) einen T-förmigen Querschnitt mit einem federelastischen Mittelsteg (181, 191) und einem vorzugsweise tellerförmigen Querteil (182, 192) aufweisen.

4. Unterwasserantenne nach Anspruch 3, **dadurch gekennzeichnet, dass** die Mittelstege (181, 191) der Halteelemente (18, 19) durch starke Einschnürungen der Vergussmasse (17) gebildet sind.

5. Unterwasserantenne nach Anspruch 3 oder 4, **dadurch gekennzeichnet, dass** jeweils eines der Querteile (181, 191) der Halteelemente (18, 19) eines Wandlerstabs (13) in eine obere und eines in eine untere, jeweils am Reflektor (12) festgelegte Haltevorrichtung (25, 26) eingehängt ist.

6. Unterwasserantenne nach Anspruch 5, **dadurch gekennzeichnet, dass** eines der beiden Querteile (182, 192), vorzugsweise das Querteil (182) des oberen Halteelements (18), eine asymmetrische Form aufweist.

7. Unterwasserantenne nach Anspruch 5 oder 6, **dadurch gekennzeichnet, dass** die Querteile (182, 192) in in den Haltevorrichtungen (25, 26) vorgehaltenen Aussparungen (28, 31) formschlüssig aufgenommen sind.

8. Unterwasserantenne nach Anspruch 7, **dadurch gekennzeichnet, dass** der Reflektor (12) mit einem Umguss (22) versehen und die obere Haltevorrichtung (25) in Form einer quer zu den Wandlerstäben (13) sich erstreckenden Leiste (27) einstückig mit dem Umguss (22) ausgebildet ist und dass in die Leiste (27) die Aussparungen (28) für die Querteile (182) der oberen Halteelemente (18) an den Wandlerstäben (13) äquidistant eingeformt sind.

9. Unterwasserantenne nach Anspruch 7 oder 8, **dadurch gekennzeichnet, dass** die untere Haltevorrichtung (26) mehrere, die unteren Halteelemente (19) der Wandlerstäbe (13) paarweise aufnehmende Halter (29) aufweist, die am Reflektor (12) befestigt sind, und dass die Halter (29) seitlich abstehende Laschen (30) aufweisen, in denen jeweils eine Aussparung (31) für das Querteil (192) des unteren Halteelements (19) an einem Wandlerstab (13) eingeformt ist.

10. Unterwasserantenne nach einem der Ansprüche 1 bis 9, **dadurch gekennzeichnet, dass** der Reflektor (12) an einem Antennenträger (23) befestigt ist.

## Claims

1. Underwater antenna, in particular for attachment to the boat hull of a submarine, with a plurality of electroacoustic transducers arranged adjacent to one another, which each have a plurality of hydrophones (14) arranged below one another, and with a reflector (12) arranged behind the transducers in the direction of sound incidence, wherein the hydrophones (14) arranged below one another of each transducer are cast by means of an acoustically transparent casting compound (17) into a transducer rod (13), **characterised by** that each transducer rod (13) is provided at its rod ends with resilient holding elements (18, 19), which are fixed on the reflector (12).

2. Underwater antenna according to claim 1, **characterised by** that the resilient holding elements (18, 19) are formed from the casting compound (17).

3. Underwater antenna according to claim 2, **characterised by** that the resilient holding elements (18, 19) have a T-shaped cross section with a springy elastic central web (181, 191) and a preferably disc-shaped transverse part (182, 192).

4. Underwater antenna according to claim 3, **characterised by** that the central webs (181, 191) of the holding elements (18, 19) are formed by strong constrictions of the casting compound (17).

5. Underwater antenna according to claim 3 or 4, **characterised by** that respectively one of the transverse parts (181, 191) of the holding elements (18, 19) of a transducer rod (13) is suspended in an upper, and one is suspended in a lower, holding device (25, 26) fixed respectively on the reflector (12).

6. Underwater antenna according to claim 5, **characterised by** that one of the two transverse parts (182, 192), preferably the transverse part (182) of the upper holding element (18), has an asymmetrical shape.

7. Underwater antenna according to claim 5 or 6, **characterised by** that the transverse parts (182, 192) are taken up in a positive-locking manner in recesses (28, 31) provided in the holding devices (25, 26).

8. Underwater antenna according to claim 7, **characterised by** that the re-flector (12) is provided with an encapsulation (22) and the upper holding device (25) is formed in one piece with the encapsulation (22) in the shape of a strip (27) extending transversely to the transducer rods (13) and that the recesses (28) for the transverse parts (182) of the upper holding elements (18) on the transducer rods (13) are formed equidistantly in the strip (27).

9. Underwater antenna according to claim 7 or 8, **characterised by** that the lower holding device (26) has several holders (29) taking up the lower holding elements (19) of the transducer rods (13) in pairs, which holders are attached to the reflector (12), and that the holders (29) have lugs (30) protruding laterally, formed respectively in which is a recess (31) for the transverse part (192) of the lower holding element (19) on a transducer rod (13).

10. Underwater antenna according to one of claims 1 to 9, **characterised by** that the reflector (12) is attached to an antenna carrier (23).

## Revendications

1. Antenne sous-marine, en particulier destinée à être montée sur une coque de navire d'un sous-marin, comprenant une pluralité de transducteurs électroacoustiques disposés les uns à côté des autres, qui présentent respectivement une pluralité d'hydrophones (14) disposés les uns sous les autres, et comprenant un réflecteur (12) disposé derrière les transducteurs dans la direction d'incidence du son, dans laquelle les hydrophones (14) disposés les uns sous les autres de chaque transducteur sont coulés au moyen d'une masse de remplissage (17) acoustiquement transparente en une barre-transducteur (13), **caractérisée en ce que** chaque barre-transducteur (13) est dotée à ses extrémités de barre d'éléments de retenue résilients (18, 19) qui sont fixés au réflecteur (12).

2. Antenne sous-marine selon la revendication 1, **caractérisée en ce que** les éléments de retenue résilients (18, 19) sont façonnés à partir de la masse de remplissage (17).

3. Antenne sous-marine selon la revendication 2, **caractérisée en ce que** les éléments de retenue résilients (18, 19) présentent une coupe en forme de T avec une âme médiane élastique (181, 191) et une partie transversale (182, 192) de préférence en forme d'assiette.

4. Antenne sous-marine selon la revendication 3, **caractérisée en ce que** les âmes médianes (181, 191) des éléments de retenue (18, 19) sont réalisées par de forts rétrécissements de la masse de remplissage (17).

5. Antenne sous-marine selon la revendication 3 ou 4, **caractérisée en ce que** respectivement l'une des parties transversales (181, 191) des éléments de retenue (18, 19) d'une barre-transducteur (13) est accrochée dans un dispositif de retenue supérieur et l'autre dans un dispositif de retenue inférieur (25, 26), chacun fixé au réflecteur (12).

6. Antenne sous-marine selon la revendication 5, **caractérisée en ce que** l'une des deux parties transversales (182, 192), de préférence la partie transversale (182) de l'élément de retenue supérieur (18), présente une forme asymétrique.

7. Antenne sous-marine selon la revendication 5 ou 6, **caractérisée en ce que** les parties transversales (182, 192) sont reçues par coopération de forme dans des évidements (28, 31) mis à disposition dans les dispositifs de retenue (25, 26).

8. Antenne sous-marine selon la revendication 7, **caractérisée en ce que** le réflecteur (12) est doté d'un encapsulage (22) et le dispositif de retenue supérieur (25) est réalisé d'un seul tenant avec l'encapsulage (22) sous forme d'une baguette (27) s'étendant transversalement aux barres-transducteurs (13) et **en ce que** les évidements (28) pour les parties transversales (182) des éléments de retenue supérieurs (18) sur les barres-transducteurs (13) sont moulés équidistants dans la baguette (27).

9. Antenne sous-marine selon la revendication 7 ou 8, **caractérisée en ce que** le dispositif de retenue inférieur (26) présente plusieurs supports (29) recevant par paires les éléments de retenue inférieurs (19) des barres-transducteurs (13), lesquels supports sont fixés au réflecteur (12), et **en ce que** les supports (29) présentent des pattes (30) dépassant latéralement dans chacune desquelles est moulé un évidement (31) pour la partie transversale (192) de l'élément de retenue inférieur (19) sur une barre-transducteur (13).

10. Antenne sous-marine selon l'une des revendications 1 à 9, **caractérisée en ce que** le réflecteur (12) est fixé sur un support d'antenne (23).
